# EUROPÄISCHE PATENTSCHRIFT

(11) **EP 1 224 676 B1**
(45) Veröffentlichungstag und Bekanntmachung des Hinweises auf die Patenterteilung: **20.07.2005**
(21) Anmeldenummer: 00971372.8
(22) Anmeldetag: 13.10.2000
(51) Int. Cl.: H01G 9/00

(54) **AKTOR MIT EINER ELEKTRODE, EINER SCHWAMMARTIGEN PERKOLIERENDEN SCHICHT, EINEM ELEKTROLYTEN UND EINEM MITTEL ZUM ANLEGEN EINER SPANNUNG**
ACTUATOR WITH AN ELECTRODE, A SPONGIFORM PERMEABLE LAYER, AN ELECTROLYTE AND A MEANS FOR APPLYING A VOLTAGE
ACTIONNEUR DOTE D'UNE ELECTRODE, D'UNE COUCHE DE PERCOLATION SPONGIEUSE, D'UN ELECTROLYTE ET D'UN MOYEN PERMETTANT D'APPLIQUER UNE TENSION

(30) Priorität: 30.10.1999 DE 19952447
(43) Veröffentlichungstag der Anmeldung: 24.07.2002
(60) Teilanmeldung: 05001880.3
(73) Patentinhaber: Forschungszentrum Karlsruhe GmbH, 76133 Karlsruhe (DE)
(72) Erfinder: GLEITER, Herbert, 76133 Karlsruhe (DE); WOLLERSHEIM, Olaf, 76297 Stutensee (DE)
(74) Vertreter: Rückert, Friedrich, Dr.
(86) Internationale Anmeldenummer: PCT/EP2000/010079
(87) Internationale Veröffentlichungsnummer: WO 2001/033590

(56) Entgegenhaltungen:
- WO-A-94/00887
- V. SRINIVASAN ET AL.: "An electrochemical route for making porous nickel oxide electrochemical capacitors" J. ELECTROCHEM. SOC., Bd. 144, Nr. 8, August 1997 (1997-08), Seiten l210--213, XP002155657 in der Anmeldung erwähnt
- KUO-CHUAN LIU ET AL.: "Porous nickel oxide / nickel films for electrochemical capacitors" J. ELECTROCHEM. SOC., Bd. 143, Nr. 1, Januar 1996 (1996-01), Seiten 124-130, XP000556213 in der Anmeldung erwähnt

## Beschreibung

Die Erfindung betrifft einen Aktor mit einer Elektrode, einer schwammartigen perkolierenden Schicht, einem Elektrolyten und einem Mittel zum Anlegen einer Spannung gemäß dem ersten Patentanspruch.

Kuo-chuan Liu und Marc A. Anderson berichten in der Veröffentlichung "Porous Nickel Oxide/Nickel Films for Electrochemical Capacitors, J. Electrochem. Soc., Vol. 143 (1996) 124-130 über elektrochemische Kondensatoren. Die Kondensatoren bestehen aus zwei im Abstand von 7 mm einander gegenüberliegenden Schichten von jeweils perkolierenden, schwammartig auf einen Träger aufgebrachten NiO/Ni-Teilchen, deren Größe 3 bis 8 nm und deren Porengröße 2 bis 3 nm beträgt. Die Schichten sind in einer elektrochemischen Zelle angeordnet, die mit einem flüssigen Elektrolyten gefüllt ist. Mit Hilfe eines ersten Schaltkreises, in dem die Zelle und ein Widerstand in Reihe geschaltet sind, kann der Kondensator über einen Potentiostaten geladen werden. Die Entladung wird durch Überbrücken des Potentiostaten erreicht. Ein Verfahren zur Herstellung der Schicht wird angegeben.

Da zwei perkolierende Schichten vorgesehen sind, die durch eine 7 mm dicke Lage des flüssigen Elektrolyten voneinander getrennt sind, ist die Verwendung auf Kondensatoren begrenzt. Andere Verwendungen, insbesondere solche, die auf optischen Effekten beruhen, sind damit ausgeschlossen. Die Art der Wechselwirkung zwischen den perkolierenden Schichten und dem Flüssigelektrolyten wird nicht exakt beschrieben; insbesondere wird nicht erwähnt, ob der Flüssigelektrolyt in die Schichten eindringt.

In "an Electrochemical Route for Making Porous Nickel Oxide Elektrochemical Capacitors" von Venkat Srinivasan und John W. Weidner, J. Electrochem. Soc., Vol. 144 (1997) L210-L213 wird über ein weiteres Herstellungsverfahren berichtet.

Aus der WO 94 00 887 A ist eine Solarzelle bekannt mit einer Elektrode, einer elektrisch leitfähigen Schicht, die schwammartig und perkolierend ist, wobei diese Schicht aus miteinander verbundenen Nanopartikeln, deren Größe zwischen 3 und 100 nm beträgt, Hohlräume enthält, die mit einem Elektrolyten gefüllt sind, und die Elektrode bedeckt, und Mitteln, mit denen der in der Schicht erzeugte Photostrom entnommen werden kann.

Der Erfindung liegt die Aufgabe zugrunde, einen Aktor mit einer perkolierenden, schwammartigen Nanopartikel-Schicht vorzuschlagen.

Die Aufgabe wird durch den in Anspruch 1 beschriebenen Aktor gelöst. Der weitere Anspruch gibt bevorzugte Ausgestaltungen des Aktors an.

Erfindungsgemäß wird ein Aktor vorgeschlagen, der auf einer Elektrode als Träger aufgebaut ist. Als Elektrode eignen sich Festkörper, Folien oder Beschichtungen aus einem gut leitenden und chemisch inerten Metall, beispielsweise Silber, Aluminium, Nickel, Gold, Platin oder Kupfer oder einer transparenten leitenden Schicht wie z. B. ITO (Indium Tin Oxide). Vorzugsweise ist die Folie 0,1 bis 1000 µm dick; dickere Folien finden Anwendung in der Aktor-Technik.

Die Elektrode ist zumindest teilweise von einer schwammartigen, perkolierenden Schicht aus miteinander verbundenen Nanopartikeln belegt. Unter "perkolierend" wird hier und in der Folge eine durchgängig miteinander mechanisch und elektrisch leitend verbundene Struktur verstanden. Vorzugsweise ist nur eine einzige perkolierende Schicht vorhanden. Die Nanopartikel können aus einem Metall, beispielsweise Silber, Gold, Palladium, Platin, Nickel oder Wolfram, einem Halbleiter wie beispielsweise Silicium, Galliumarsenid oder Cadmiumsulfid, oder einem Ionenkristall wie Nickeloxid oder Rutheniumoxid bestehen.

Die Größe der Nanopartikel beträgt höchstens das 15-fache der Größe einer sich ausbildenden Raumladungszone. Der Begriff "Raumladungszone" ist z. B. in K. H. Hellwege, Einführung in die Festkörperphysik, Springer 1976, Kapitel 46.2 oder Ch. Kittel, Einführung in die Festkörperphysik, Oldenbourg, 10. Auf. 1993, Abschnitt "Schottky-Barrieren" definiert und erläutert. Die Raumladungszone ist bei Metallen etwa ein zehntel nm groß. Metall-Nanopartikel sollten somit idealerweise ca. 1,5 nm groß sein. Bei Halbleitern ist die Raumladungszone abhängig von der Dotierung zwischen einigen und einigen hundert nm groß. Somit sollten Halbleiter-Nanopartikel etwa 15 bis 3000 nm groß sein.

Die Größe der Hohlräume oder Poren in der schwammartigen perkolierenden Schicht muß mindestens der Raumladungszone im Elektrolyten entsprechen. Sie können ansonsten beliebig groß sein. Aus Gründen einer optimalen Packungsdichte wird man für die Hohlräume eine Größe wählen, die die Größe der Raumladungszone nur wenig übersteigt, etwa maximal das 2-fache der Raumladungszone.

Die Hohlräume der Schicht sind zumindest teilweise mit einem Elektrolyten ausgefüllt. Der Elektrolyt kann einerseits ein Fest- oder Flüssigelektrolyt, z. B. eine Salzlösung, sein. Vorzugsweise sollen die Hohlräume möglichst vollständig mit dem Elektrolyten ausgefüllt sein. Durch die vollständige Befüllung ist sichergestellt, daß sich dieselbe Ladung, die sich in der Raumladungszone im Metall oder Halbleiter befindet, auch im Elektrolyten in dessen typischer Raumladungszone verteilt.

An die freie, nicht auf der Elektrode aufliegende Oberfläche der perkolierende Schicht grenzt außerdem ein Film des Elektrolyten an. Dieser Film kann einerseits unmittelbar auf der Schicht aufgebracht sein; alternativ kann eine dünne, z. B. 0,1 bis 10 nm dicke Lage eines isolierenden Materials zwischen der Schicht und dem Film vorgesehen werden. In beiden Fällen sollte die Filmdicke ca. 1 bis 1000 µm betragen.

Schließlich sind bei dem Aktor Mittel vorgesehen, mit denen sich zwischen der Elektrode und dem Elektrolyten eine Spannung anlegen läßt. Die Spannung soll einige Volt, vorzugsweise 1 bis 3 Volt, betragen. Spannungen über 10 V sind in der Regel unnötig.

Bei einem solchen Aktor werden durch eine angelegte Spannung Elektronen aus dem Leitungsband des Metalls oder Halbleiters, der die schwammartige perkolierende Schicht bildet, entfernt und wandern in den Elektrolyten. Infolge der Nanostruktur der schwammartigen Schicht befindet sich die überwiegende Zahl der Atome dieser Schicht an leicht zugänglichen Oberflächen, so daß bis zu 30 % der Atome der Schicht Elektronen abgeben können. Der dadurch erzielte Effekt kann zur Änderung der Eigenschaften durch Anlegen und Abschalten der Spannung ausgenutzt werden. Der erwähnte Effekt ändert die mechanischen Eigenschaften, so daß die Vorrichtung als Aktor oder Stellelement mit Volumenausdehnungseffekt eingesetzt werden kann.

Die schwammartige perkolierende Schicht läßt sich nach mehreren Verfahren herstellen. Mögliche Herstellungsverfahren sind
a) die Gasphasenkondensation, bei der das Metall oder der Halbleiter in einem Vakuumrezipienten verdampft wird, der mit Edelgas eines bestimmten Partialdrucks gefüllt ist. Bei geeignet gewählten Verfahrensparametern entsteht das Netzwerk der schwammartigen Schicht durch Auffangen der dabei entstehenden Nanopartikel auf einer gekühlten Unterlage;
b) das Auslaugen aus einem Mischkristall oder einem mehrphasigen Glas. Hierbei wird eine spinodale Entmischung eines Ionenkristalls in zwei Phasen, z. b. eine calciumreiche und eine bariumreiche Phase, ausgenutzt. Diese beiden Phasen sind in der beschriebenen Weise schwammartig strukturiert. Wegen der unterschiedlichen Löslichkeit in geeigneten Lösungsmitteln läßt sich eine der beiden Phasen herauslösen und man erhält das gesamte Netzwerk;
c) die elektrochemische Abscheidung. Durch geeignete Abscheidebedingungen gelingt die Abscheidung von Metallen in einer schwammartigen Schicht auf einer Elektrode.

## Patentansprüche

1. Aktor
a) mit einer Elektrode,
b) die mit einer Schicht aus einer schwammartigen, durchgängig miteinander mechanisch und elektrisch leitend verbundenen Struktur aus Nanopartikeln, die Hohlräume enthält, belegt ist, wobei die Nanopartikel aus einem Metall, einem Halbleiter oder einem Ionenkristall bestehen und die Größe der Nanopartikel höchstens das 15-fache der Größe einer sich ausbildenden Raumladungszone in der Schicht beträgt,
c) in der die Hohlräume zumindest teilweise mit einem Elektrolyten gefüllt sind, wobei die Größe der Hohlräume in der Schicht mindestens der Raumladungszone im Elektrolyten entspricht und
d) an die nicht auf der Elektrode aufliegende Oberfläche der Schicht außerdem ein Film des Elektrolyten angrenzt, sowie
e) mit Mitteln, mit deren Hilfe sich zwischen der Elektrode und dem Elektrolyten eine Spannung anlegen lässt.

2. Aktor nach Anspruch 1, bei dem zwischen dem an der nicht auf der Elektrode aufliegenden Oberfläche der Schicht angrenzenden Film des Elektrolyten und der Schicht eine Lage aus einem isolierenden Material vorgesehen ist.

## Claims

1. Actuator
a) with an electrode
b) that is coated by a layer of a spongy, mechanically coherent, and electrically conductive structure of nanopartides, which contains cavities, with the nanoparticles consisting of a metal, a semiconductor or an ion crystal and the maximum size of the nanoparticles amounting to 15 times the size of a space charge region developing in the layer,
c) in which the cavities are at least partly filled with an electrolyte and the size of the cavities in the layer corresponding to the space charge region in the electrolyte at least, and
d) a film of the electrolyte adjoining that layer surface that is not lying on the electrode, and
e) with means, with the help of which a voltage may be applied between the electrode and the electrolyte.

2. Actuator according to claim 1, with a layer of an insulating material being located between the electrolyte film adjoining that surface of the layer that is not lying on the electrode and the layer.

## Revendications

1. Acteur
a) équipé d'une électrode
b) qui est recouverte d'une couche d'une structure de nanoparticules spongieuse, interconnectée, conductrice mécaniquement et électriquement, qui contient des cavités, les nanoparticules consistant en un métal, un semiconducteur ou un cristal à liaison ionique, la taille des nanoparticules correspondant au maximum à 15 fois la taille d'une zone de charge d'espace dans la couche,
c) dans laquelle les cavités sont du moins partiellement remplies d'un électrolyte, la taille des cavités correspondant au moins à la zone de charge d'espace dans l'électrolyte et
d) un film de l'électrolyte est en outre adjacent à la surface de couche non appuyée sur l'électrode ainsi que
e) des moyens permettant d'appliquer une tension entre l'électrode et l'électrolyte

2. Acteur selon la revendication 1, où, entre le film de l'électrolyte adjacent à la surface de couche non appuyée sur l'électrode et la couche, une couche intermédiaire de matériau isolant est prévue.
